# FASCICULE DE BREVET EUROPEEN

(11) **EP 3 024 641 B1**
(45) Date de publication et mention de la délivrance du brevet: **19.06.2019**
(21) Numéro de dépôt: 14755869.6
(22) Date de dépôt: 21.07.2014
(51) Int. Cl.: B29D 23/00, E21B 17/01, F16L 11/12, B29C 48/15

(54) **PROCÉDÉ ET INSTALLATION DE FABRICATION D'UNE CONDUITE INSTRUMENTÉE**
VERFAHREN UND ANLAGE ZUR HERSTELLUNG EINES INSTRUMENTIERTEN ROHRS
METHOD AND FACILITY FOR PRODUCING AN INSTRUMENTED PIPE

(30) Priorité: 26.07.2013 FR 1357408
(43) Date de publication de la demande: 01.06.2016
(73) Titulaire: Technip France, 92400 Courbevoie (FR)
(72) Inventeur: ESTRIER, Pascal, F-76490 Saint Wandrille Rançon (FR); DELCROIX, Olivier, F-76000 Rouen (FR); MESNAGE, Olivier, F-76840 Saint Martin de Boscherville (FR); CHAVES, Victor Viana, 22441-120 Rio de Janeiro (BR); CARVALHO, Claudio Da Silveira, 22743-670 Rio de Janeiro (BR)
(74) Mandataire: Fédit-Loriot
(86) Numéro de dépôt international: PCT/FR2014/051881
(87) Numéro de publication internationale: WO 2015/011394

(56) Documents cités:
- WO-A1-2011/042023
- WO-A1-2013/098546
- FR-A1- 2 691 203

## Description

La présente invention se rapporte à un procédé et une installation de fabrication d'une conduite flexible instrumentée pour le transport des hydrocarbures, ainsi qu'à une conduite flexible instrumentée obtenue par ledit procédé.

Un domaine d'application envisagé est celui des conduites flexibles sous-marines permettant de véhiculer les hydrocarbures entre une installation sous-marine située sur un fond marin et une installation de surface surplombant l'installation sous-marine. Entre le fond marin et la surface, les mouvements de la mer sont multiples et ils exercent des contraintes sur les conduites sous-marines.

De telles conduites flexibles sous-marines sont notamment décrites dans les documents normatifs API 17J « Spécification for Unbonded Flexible Pipe » et API RP 17B « Recommended Practice for Flexible Pipe» publiés par l' « American Petroleum Institute ».

Des conduites flexibles instrumentées connues sont équipées de capteurs à fibre optique déployés sur toute la longueur de la conduite. Ces capteurs permettent de mesurer localement les déformations de la conduite et notamment, sa courbure, son allongement, sa torsion, ou bien encore son gonflement.

Au voisinage de la surface, les mouvements de la mer sont plus prononcés et les conduites flexibles sont mécaniquement plus sollicitées. Aussi, il est nécessaire de suivre en temps réel les déformations de celles-ci. Il est notamment nécessaire de détecter les endommagements critiques des conduites et de leurs équipements.

Par exemple, la rupture d'un raidisseur ou d'un limiteur de courbure peut entraîner, suite à une agitation du milieu marin, une diminution importante du rayon de courbure de la conduite, et ainsi l'endommager. Ou encore, une rupture partielle des armures de tractions d'une conduite flexible peut quant à elle provoquer à la fois un allongement et une torsion de la conduite. En outre, une rupture des bandes anti-gonflements peut conduire à un gonflement local important de la gaine externe de la conduite flexible. Un tel gonflement peut aussi être provoqué par une augmentation anormale de la pression régnant dans un espace annulaire de la conduite flexible.

Aussi, en enregistrant dans le temps les déformations de la conduite flexible précitées, il est aisé d'évaluer et de réactualiser sa durée de vie durant sa période de service. De la sorte, on évite les ruptures brutales, ce qui permet non seulement de mettre en oeuvre une organisation optimale pour le remplacement des conduites, et partant plus économique, mais aussi, de prévoir des améliorations techniques tenant compte des endommagements subis.

Les fibres optiques peuvent être utilisées à la fois en tant que capteur pour effectuer diverses mesures, et en temps que canal de transmission pour transmettre les signaux de ces mesures.

Dans la présente demande, le terme « capteur à fibre optique » (« optical fibre sensor » en langue anglaise) désigne une fibre optique utilisée en tant que capteur pour effectuer des mesures, par exemple des mesures de déformation, de température ou de composition chimique.

Les capteurs à fibre optique ont des propriétés qui les rendent bien adaptés à l'instrumentation en environnement sévère de structures de grande longueur, notamment des conduites flexibles sous-marines. Tout d'abord un capteur à fibre optique peut avoir une très grande longueur, jusqu'à plusieurs dizaines de kilomètres, ce qui permet d'instrumenter une structure de grande longueur. Ensuite, chaque capteur à fibre optique peut comporter un grand nombre de zones de mesure distribuées ou réparties sur toute la longueur de la fibre optique, ce qui permet avec un seul capteur à fibre optique d'obtenir des mesures provenant de nombreuses zones de mesure disposées le long de la conduite. Il est aussi possible de déporter les zones de mesure à une grande distance de l'unité d'acquisition et de traitement des signaux. En outre, les capteurs à fibre optique sont intrinsèquement anti déflagrant ce qui permet de les utiliser en environnement explosif. Ils sont aussi insensibles aux perturbations électromagnétiques. Enfin, les capteurs à fibre optique sont compacts du fait du faible diamètre des fibres optiques, ce qui facilite leur intégration au sein de la paroi des conduites flexibles.

On connait des capteurs à fibre optique dans lesquels la fibre optique a été modifiée localement pour former des capteurs, les zones modifiées fournissant les mesures et le reste de la fibre servant à acheminer les signaux des mesures vers l'appareillage d'acquisition et de traitement. C'est en particulier le cas des capteurs à fibre optique comportant des réseaux de Bragg réalisés par un procédé de photogravure, ces réseaux pouvant notamment être utilisés pour effectuer des mesures d'allongement ou de température.

On connait aussi des capteurs à fibre optique dans lesquels la fibre optique n'a pas été modifiée localement et dans lesquels la totalité de la fibre optique joue à la fois le rôle de capteur et le rôle de canal de transmission des signaux. C'est en particulier le cas des capteurs basés sur des méthodes de réflectométrie, notamment des méthodes de réflectométrie Rayleigh, Raman ou Brillouin. La méthode de réflectométrie Raman permet d'effectuer une mesure distribuée de température le long d'une fibre optique non modifiée localement. La méthode de réflectométrie Brillouin permet quant à elle d'effectuer une mesure distribuée de température et/ou de déformation le long d'une fibre optique non modifiée localement.

Selon l'art antérieur, un capteur à fibre optique est installé sur toute la longueur de la conduite flexible et un dispositif optoélectronique de génération et d'acquisition de signaux optiques est monté à l'une des extrémités de la conduite pour pouvoir acquérir et traiter les signaux émis par les capteurs. De la sorte, on peut par exemple mesurer en temps réel l'allongement de la fibre optique en plusieurs zones de mesure le long de cette dernière et en déduire la déformation de la conduite. Pour que les allongements mesurés localement par le capteur à fibre optique correspondent aux déformations locales de la conduite, il est important que le capteur à fibre optique correctement solidarisé à la conduite au niveau des zones de mesure d'allongement.

Le document WO2009/068905 divulgue une conduite flexible instrumentée, comprenant de l'intérieur vers l'extérieur, une gaine de pression en matériau polymère, un fil d'armure de pression enroulé a pas court autour de la gaine de pression, des fils d'armure de traction enroulés à pas long autour du fil d'armure de pression et une gaine de protection. La gaine de pression ou la gaine externe est équipée d'un capteur à fibre optique enroulé en hélice, ce capteur à fibre optique étant couplé à cette gaine de façon à pouvoir faire des mesures de déformation.

La mise en oeuvre d'un tel capteur à fibre optique soulève des difficultés techniques. Tout d'abord, l'allongement à la rupture des fibres optiques est très inférieur à celui des gaines réalisées en matériau polymère. En outre, la fibre doit être solidaire sur toute sa longueur à la gaine à laquelle elle est couplée de manière à épouser ses déformations. Au surplus, une fibre optique est relativement fragile et sa position relative par rapport à la gaine doit être précisément définie. L'objet des documents WO2013/098546A1 et WO2011/042023A1 ne permet pas non plus de s'affranchir de la fragilité de la fibre optique.

Aussi, un problème qui se pose et que vise à résoudre la présente invention est de fournir un procédé de fabrication d'une conduite flexible instrumentée, qui permette non seulement d'ajuster précisément la position d'un capteur à fibre optique par rapport à une gaine, mais aussi qui permette de solidariser fermement le capteur à fibre optique et la gaine.

Dans ce but, la présente invention propose, selon un premier objet, un procédé de fabrication d'une conduite flexible instrumentée pour le transport des hydrocarbures, ledit procédé de fabrication étant du type comprenant les étapes suivantes : on fournit, d'une part une structure tubulaire comprenant une gaine de support en matériau polymère présentant une surface externe cylindrique libre, et d'autre part au moins un capteur à fibre optique; et, on enroule hélicoïdalement ledit au moins un capteur à fibre optique autour de ladite gaine de support pour pouvoir solidariser ledit au moins un capteur à fibre optique avec ladite gaine de support. Selon l'invention, on fournit en outre une gaine de maintien, et on applique coaxialement ladite gaine de maintien sur ladite gaine de support, de façon à maintenir ledit au moins un capteur à fibre optique en position fixe contre ladite surface externe cylindrique.

Ainsi, une caractéristique de l'invention réside dans la mise en oeuvre du capteur à fibre optique entre la gaine de support et la gaine de maintien. Ainsi, le capteur à fibre optique est maintenu en prise entre la gaine de support et la gaine de maintien. Il est alors solidaire de la surface externe de la gaine de support. De la sorte, le capteur à fibre optique peut être ajusté dans une position précise sur la surface externe de la gaine de support. De plus, le capteur à fibre optique étant solidaire de la gaine de support, il peut être utilisé pour mesurer les déformations de la gaine de support afin d'en déduire les déformations de la conduite et notamment, sa courbure, son allongement, sa torsion, ou bien encore son gonflement.

Une telle mise en oeuvre du capteur à fibre optique à la surface de la gaine de support est bien plus aisée que celle consistant à le noyer dans l'épaisseur d'une gaine. La présente invention permet notamment d'éviter d'avoir à guider le capteur à fibre optique, lors de l'extrusion d'une gaine , entre les lèvres de sortie de la tête d'extrusion, et d'avoir à ensuite à le maintenir dans l'épaisseur de cette gaine durant le refroidissement de celle-ci.

La présente invention est aussi plus aisée à mettre en oeuvre que la solution qui consisterait premièrement à usiner une gorge le long de la face externe d'une gaine de support, deuxièmement à déployer le capteur à fibre optique au fond de cette gorge et troisièmement à reboucher cette gorge à l'aide d'un polymère fondu venant se souder avec le polymère constituant la gaine de support de façon à solidariser le capteur à fibre optique avec la gaine de support.

Selon un mode de mise en oeuvre de l'invention particulièrement avantageux, on forme ladite gaine de maintien en matériau polymère autour de ladite gaine de support pour pouvoir appliquer coaxialement ladite gaine de maintien contre ladite surface externe cylindrique. Aussi, on vient extruder directement la gaine de maintien autour de la gaine de support équipée du capteur à fibre optique. Le capteur à fibre optique est enroulé en spirale et appliqué contre la surface externe cylindrique de la gaine de support, de manière à former une hélice d'un pas déterminé. Et la gaine de maintien vient alors s'appliquer coaxialement sur la surface externe cylindrique en emprisonnant le capteur à fibre optique.

En outre, avantageusement, on enroule hélicoïdalement ledit au moins un capteur à fibre optique, avec un angle d'hélice compris entre 45,5° et 54,5° ou entre 55° et 66,5° par rapport à l'axe de la structure tubulaire. En effet, on a découvert que le choix d'un tel angle d'hélice permet d'effectuer des mesures précises de déformation de la structure tubulaire, tout en évitant de risquer d'endommager le capteur à fibre optique lorsque la structure tubulaire est enroulée avec un faible rayon de courbure.

Ainsi, lorsque la structure tubulaire est enroulée à son rayon de courbure minimum (« minimum bending radius » en langue anglaise), la déformation axiale de la gaine de support peut couramment atteindre 8%.

Or, les seuls capteurs à fibre optiques capables de supporter durablement un tel allongement sont ceux constitués d'une fibre optique polymère, par exemple d'une fibre optique en polyméthylméthacrylate (PMMA) ou en poly-perfluoro-butenyl-vinyl-ether (polymère commercialisé sous la marque Cytop®). Cependant, ces fibres optiques en polymère ont plusieurs inconvénients. Tout d'abord, leur atténuation optique est élevée, elle est typiquement comprise entre 30 dB/km et 150 dB/km. Par suite, les capteurs à fibre optique polymérique ont une longueur maximale comprise entre 100 mètres à 500 mètres, ce qui peut être insuffisant pour certaines applications. Le second inconvénient des fibres optiques polymériques est leur incapacité à supporter des températures supérieures à approximativement 100°C. Or, la température régnant à l'intérieur d'une tête d'extrusion est très supérieure à cette limite, si bien que de telles fibres optiques ne peuvent pas supporter un passage à l'intérieur d'une tête d'extrusion.

Les fibres optiques en verre peuvent quant à elles résister au passage à l'intérieur d'une tête d'extrusion. En effet, certaines fibres optiques en verre, notamment celles revêtues de carbone et de polyimide, sont capables de supporter durablement une température de 300°C, alors que la température d'extrusion d'une gaine en polyéthylène ou en polyamide est de l'ordre de 200°C. Un autre avantage des fibres optiques en verre est leur très faible atténuation optique (< 3 dB/km) ce qui permet de les utiliser pour effectuer des mesures déportées à plus de 5km, couramment jusqu'à plus de 15 km.

Cependant, l'inconvénient majeur des fibres optiques en verre est leur manque de ductilité et leur faible allongement à la rupture. En pratique, il est recommandé de limiter leur allongement relatif à une valeur inférieure à 2% et préférentiellement inférieure à 1%, faute de quoi on risquerait une rupture prématurée, notamment dans le cas d'une sollicitation cyclique pouvant générer un phénomène de fatigue.

Par suite, la présente invention est avantageusement mise en oeuvre avec un capteur à fibre optique en verre de façon à résoudre de problème de résistance à la température. De plus, le problème de résistance à l'allongement est résolu grâce à enroulement hélicoïdal du capteur à fibre optique, ce qui permet de faire en sorte que l'allongement du capteur à fibre optique soit nettement inférieur à celui de la gaine de support à laquelle il est solidarisé.

Or, il a été découvert un phénomène surprenant concernant le choix de l'angle d'hélice du capteur à fibre optique. En effet, il a été découvert que lorsque la structure tubulaire est déformée en courbure, le capteur à fibre optique ne subit quasiment aucun allongement dès lors que son angle d'hélice est compris entre 54,7° et 54,8°, avantageusement approximativement égal à 54,74°, et ceci même si la structure tubulaire est fortement courbée, par exemple enroulée à son rayon minimum de courbure.

De plus, il a été découvert que lorsque la structure tubulaire est déformée en courbure, l'allongement maximal le long du capteur à fibre optique diminue progressivement depuis une première valeur maximale jusqu'à zéro quand l'angle d'hélice augmente de 0° à approximativement 54,75°, puis que cet allongement augmente ensuite progressivement de zéro jusqu'à une deuxième valeur maximale lorsque l'angle d'hélice augmente depuis approximativement 54,75° jusqu'à 90°. En outre, la deuxième valeur maximale est quasiment égale à la moitié de la première valeur maximale, c'est-à-dire que l'allongement maximal le long du capteur à fibre optique lorsque l'angle d'hélice est égal à 0° est quasiment le double de celui lorsque l'angle d'hélice est égal à 90°.

Ce phénomène semble lié au coefficient de poisson élevé des polymères pouvant constituer la gaine de support, c'est-à-dire au fait que lorsqu'une zone de la gaine de support est sollicitée axialement en traction (par exemple une zone située à l'extrados lorsque la gaine est courbée), cette zone a tendance à se contracter fortement selon une direction circonférentielle.

La découverte de ce phénomène a permis de définir les domaines d'angles d'hélice pouvant convenir pour des capteurs à fibre optique en verre.

Le premier critère est que l'angle d'hélice doit être compris entre 44,5° et 66,5°, et préférentiellement compris entre 49,5° et 60,3°, pour éviter d'allonger excessivement le capteur à fibre optique lorsque la structure tubulaire est enroulée à son rayon minimum de courbure.

Le deuxième critère, qui est uniquement applicable dans le cas où on souhaite pouvoir effectuer des mesures de courbure, est d'éliminer les angles d'hélice compris entre 54,7° et 54,8°, faute de quoi le capteur à fibre optique serait insensible au phénomène devant être mesuré. En outre, avantageusement, pour améliorer la précision de mesure de courbure, il est souhaitable d'éliminer les angles d'hélice compris entre 54,5° et 55°. De plus, préférentiellement pour obtenir une bonne précision de mesure de courbure, il est préférable d'éliminer les angles d'hélice compris entre 53,9°et 55,8°.

La combinaison de ces deux critères conduit à choisir un angle d'hélice compris entre 45,5° et 54,5° ou entre 55° et 66,5°. En outre, préférentiellement, l'angle d'hélice est compris entre 49,5° et 53,9° ou entre 55,8° et 60,3°.

En outre, selon un mode de réalisation avantageux de l'invention, le capteur à fibre optique est un capteur de mesure de déformation, typiquement un capteur permettant de mesurer l'allongement de la fibre optique parallèlement à l'axe de la fibre optique. De la sorte, il est possible de déduire des mesures les différents modes de déformation de la structure tubulaire, et notamment sa courbure, son allongement, son gonflement et sa torsion.

Avantageusement, on peut instrumenter la conduite flexible avec plusieurs capteurs à fibre optique présentant des angles d'hélice différents et/ou croisés entre eux de façon à obtenir suffisamment de mesures pour pouvoir décorréler et déduire précisément les déformations de la structure tubulaire (courbure, tension, gonflement, torsion). Ainsi, par exemple, un capteur à fibre optique enroulé avec un angle de 54,75° est insensible à la courbure de la conduite flexible, mais peut donner des informations sur ses autres modes de déformation, à savoir l'allongement, le gonflement et la torsion. Par contre un capteur à fibre optique enroulé avec un angle d'hélice compris entre 45.5° et 54.5° ou entre 55° et 66,5° est sensible à tous les modes de déformation de la conduite flexible.

D'autre part, en comparant les mesures obtenues dans des zones différentes situées le long de la conduite flexible, ces mesures étant obtenues soit avec le même capteur à fibre optique soit avec des capteurs à fibre optique différents, il est possible de déduire plus précisément les modes de déformation de la conduite flexible.

Ainsi, par exemple, lorsque la conduite flexible présente une zone dynamique située à proximité immédiate d'une zone statique, il est avantageux de comparer les mesures obtenues dans ces deux zones pour en déduire, par différence, les variations de courbure dans la zone dynamique, les autres sollicitations (tension, gonflement, torsion) étant supposées être sensiblement identiques dans les deux zones comparées. Cette solution peut notamment être mise en oeuvre en partie supérieure d'un riser, lorsque la conduite flexible est déployée à travers un I-tube au bas duquel est fixé un raidisseur. Dans cette configuration, la zone supérieure de la conduite flexible à l'intérieur du I-tube est une zone statique au niveau de laquelle la conduite est quasiment immobile, tandis que la zone située un peu plus bas au niveau du raidisseur est une zone dynamique au niveau de laquelle la conduite peut subir de fortes variations de courbure.

De plus, préférentiellement, la présente invention est mise en oeuvre avec un capteur à fibre optique comportant au moins un réseau de Bragg, avantageusement au moins dix réseaux de Bragg.

Selon un mode de réalisation de l'invention privilégié, on fournit ledit au moins un capteur à fibre optique noyé à l'intérieur d'un corps longitudinal. Ainsi, le capteur à fibre optique est protégé vis-à-vis de l'extérieur à l'intérieur d'un corps longitudinal. Celui-ci est par exemple constitué d'un jonc à l'intérieur duquel vient s'étendre axialement le capteur à fibre optique. De plus, avantageusement, on enroule hélicoïdalement ledit corps longitudinal autour de ladite gaine de support pour pouvoir solidariser ledit au moins un capteur à fibre optique avec ladite gaine de support. De la sorte, le capteur à fibre optique est préservé lorsque le corps longitudinal préalablement enroulé sur une bobine, est déroulé pour traverser ensuite des organes de guidage, pour ensuite être appliqué contre la surface externe cylindrique. Préférentiellement, on relie ledit corps longitudinal et ladite surface externe cylindrique. Il est par exemple relié sur toute sa longueur à la surface de la gaine de support, par collage ou par soudage ou bien encore par ancrage mécanique. De la sorte, le capteur à fibre optique est parfaitement solidaire de la gaine de support par l'intermédiaire du corps longitudinal et leur position relative est parfaitement déterminée avant que ne soit appliquée la gaine de maintien. Cette dernière vient ensuite emprisonner le corps longitudinal et le maintient en appui contre la surface externe cylindrique de la gaine de support. Partant, le capteur à fibre optique est apte à subir sans endommagement les mouvements de la gaine de support et de la conduite flexible.

Avantageusement, on fournit ledit au moins un capteur à fibre optique noyé à l'intérieur d'un corps longitudinal de section trapézoïdale. Selon une variante de réalisation, ladite section trapézoïdale présente une base large opposée à une base étroite, et le corps longitudinal est aplati et il présente deux faces opposées larges par rapport à deux bords opposés biseautés. Ainsi qu'on l'expliquera ci-après plus en détail dans la suite de la description, la base large du corps longitudinal est appliquée contre la surface cylindrique de la gaine de support, de manière à ce que les deux bords opposés biseautés forment respectivement un angle supérieur à 90° avec la surface cylindrique. Cette caractéristique permet un meilleur passage de la structure tubulaire à travers une installation de fabrication que l'on décrira ci-après.

Selon un mode préféré de réalisation de l'invention, on fournit une structure tubulaire comprenant en outre au moins une nappe d'armures de traction. Au sens de la présente demande, une nappe d'armures de traction comporte un ensemble de fils de renfort enroulés en hélice le long de l'axe de la structure tubulaire avec un angle d'hélice de valeur absolue comprise entre 15° et 60°, de façon à pouvoir reprendre efficacement les efforts de traction. Les fils de renfort sont généralement des fils métalliques. Ils peuvent aussi être constitués d'un matériau composite, par exemple d'un composite à base de fibres de carbone.

Selon une variante avantageuse de la présente invention, la gaine de support est située à l'extérieur de ladite au moins une nappe d'armures de traction. De plus, préférentiellement, la gaine de maintien est la couche la plus extérieure de ladite structure tubulaire. En outre, avantageusement, la structure tubulaire comporte, à l'intérieur de ladite au moins une nappe d'armures de traction, une autre gaine en matériau polymère.

Ainsi, par exemple, la structure tubulaire comporte au moins, de l'intérieur vers l'extérieur, une gaine interne appelée gaine de pression et destinée à assurer l'étanchéité vis-à-vis des hydrocarbures circulant dans la conduite, une paire de nappe d'armures de traction croisées entre elles, une gaine de support entourée d'un capteur à fibre optique et enfin une gaine de maintien. Dans cette variante, la gaine de support et/ou la gaine de maintien jouent aussi le rôle d'une gaine externe de protection de la structure tubulaire.

Selon une autre variante de la présente invention, la gaine de support est située à l'intérieur de ladite au moins un nappe d'armures de traction. Selon cette variante, la gaine de support peut par exemple être la gaine la plus interne de la structure tubulaire, c'est-à-dire que la gaine de support est alors confondue avec la gaine de pression. Cette variante peut aussi être mise en oeuvre en utilisant en tant que gaine de support une gaine intermédiaire disposée entre la gaine de pression et les nappes d'armures de traction.

Selon un autre objet, la présente invention concerne une installation de fabrication d'une conduite flexible instrumentée pour le transport des hydrocarbures selon la revendication 15.

Ledit dispositif de transformation comprend une tête d'extrusion annulaire pour pouvoir former ladite gaine de maintien en matériau polymère autour de ladite gaine de support. De la sorte, le capteur à fibre optique est préalablement enroulé en hélice autour de la gaine de support pour être appliqué contre la surface externe cylindrique, et ensuite la structure tubulaire traverse la tête d'extrusion qui elle, vient former la gaine de maintien autour de la structure tubulaire. Après quoi, au fur et à mesure de l'avancement de la structure tubulaire, la gaine de maintien vient s'appliquer sur la gaine de support pour venir ensuite en refroidissant enserrer le capteur à fibre optique contre la surface cylindrique.

De plus, l'installation comprend une chambre étanche située entre ladite entrée et ladite tête d'extrusion annulaire pour pouvoir créer une dépression autour de ladite structure tubulaire. De la sorte, en créant une dépression autour de la structure tubulaire et plus précisément entre cette dernière et la gaine de maintien en cours d'application, la gaine de maintien vient se plaquer naturellement contre la surface externe cylindrique de la gaine de support.

D'autres particularités et avantages de l'invention ressortiront à la lecture de la description faite ci-après de modes de réalisation particuliers de l'invention, donnés à titre indicatif mais non limitatif, en référence aux dessins annexés sur lesquels :
- la Figure 1A est une vue schématique partielle en perspective et en écorché d'une conduite flexible instrumentée, obtenue selon un procédé de fabrication conforme à l'invention ;
- la Figure 1B est une vue schématique d'une conduite flexible instrumentée en service ;
- la Figure 2 est une vue schématique de détail de la Figure 1 ;
- la Figure 3 est une vue schématique d'une installation de fabrication d'une conduite flexible instrumentée selon l'invention conformément un premier mode de réalisation ;
- la Figure 4 est une vue schématique d'une installation d'une conduite flexible instrumentée conformément à un second mode de réalisation ;
- la Figure 5 est une vue schématique de détail de la Figure 4 ;
- la Figure 6 est une vue schématique en coupe droite d'un élément de détail mis en oeuvre dans les installations représentées sur les Figures 3 et 4, et selon une première variante d'exécution ; et,
- la Figure 7 est une vue schématique en coupe droite d'un élément de détail mis en oeuvre dans les installations représentées sur les Figures 3 et 4, et selon une seconde variante d'exécution.

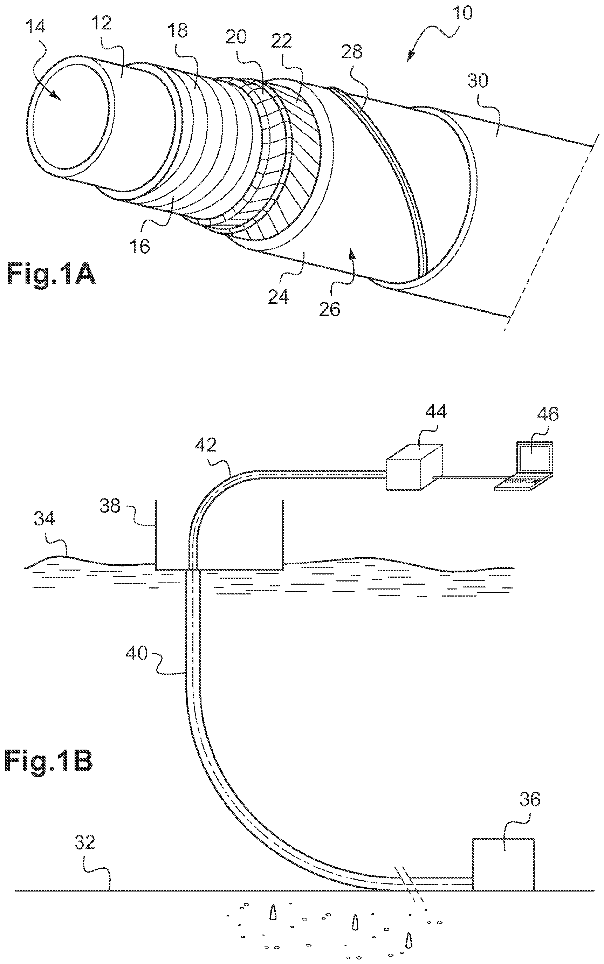

La Figure 1A illustre une conduite flexible instrumentée 10 destinée au transport des hydrocarbures. Elle est constituée de différentes couches.

La conduite flexible 10 comprend tout d'abord une gaine interne de pression 12, à l'intérieur 14 de laquelle vient circuler l'hydrocarbure. La gaine de pression 12 est destinée à confiner de manière étanche le fluide transporté dans le passage 14. Elle est réalisée dans un matériau polymère, par exemple à base d'un polyoléfine tel que du polyéthylène, à base d'un polyamide tel que du PA11, du PA12 ou du PA6-12, ou à base d'un polymère fluoré tel que du polyfluorure de vinylidène (PVDF). L'épaisseur de la gaine de pression est par exemple comprise entre 5mm et 20mm.

Autour de la gaine de pression 12, est disposée la voûte de pression 18, couche dont la fonction est de reprendre les efforts liés à la pression régnant à l'intérieur de la gaine de pression 12. La voûte de pression 18 est formée d'au moins un fil profilé métallique enroulé en hélice à pas court autour de la gaine de pression 12. Le fil profilé présente généralement une géométrie complexe, notamment en forme de Z, de T, de U, de K, de X ou de I, permettant d'agrafer entre elles les spires adjacentes. Dans la présente demande, le terme « à pas court » signifie que la valeur absolue de l'angle d'hélice est proche de 90°, typiquement comprise entre 75° et 90°.

Autour de la voûte de pression 18, deux nappes superposées 20, 22, d'armures de traction sont enroulées respectivement à pas long inversés. Dans la présente demande, le terme « à pas long » signifie que la valeur absolue de l'angle d'hélice est inférieure ou égale à 60°, typiquement comprise entre 15° et 55°.

La conduite flexible 10 est une conduite « non liée » (« unbonded » en langue anglaise) du type de celles décrites dans le document normatif API 17J, car la gaine de pression 12, la voûte de pression 18, les nappes d'armure de traction 20, 22 et la gaine externe 24 sont libres de se déplacer longitudinalement les unes par rapport aux autres lors d'une flexion de la conduite.

La conduite flexible 10 peut aussi comporter une carcasse interne, non représentée sur la Figure 1A, ladite carcasse interne étant disposée à l'intérieur de la gaine de pression 12. La carcasse interne, lorsqu'elle est présente, est formée par exemple d'un feuillard métallique profilé, agrafé et enroulé en spirale. La fonction principale de la carcasse interne est de reprendre les efforts radiaux d'écrasement. Une conduite flexible dépourvue de carcasse interne, du type de celle représentée dur la Figure 1A, est dite « à passage lisse » (« smooth bore » en langue anglaise). Une conduite flexible comportant une carcasse interne est dite « à passage non lisse » (« rough bore » en langue anglaise).

Selon le mode de réalisation de l'invention représenté sur la Figure 1A, la gaine externe étanche 24 est confondue avec la gaine de support sur laquelle est enroulé un capteur à fibre optique. La gaine de support 24 présente une surface externe cylindrique 26 sur laquelle est appliquée une bande instrumentée 28 formant un corps longitudinal. Cette bande instrumentée 28 s'étend en spirale à pas long sur la surface externe cylindrique 26.

En outre, et ainsi qu'on le détaillera ci-après, la bande instrumentée 28 inclut dans son épaisseur, au moins un capteur à fibre optique permettant de mesurer l'allongement de la fibre optique, de façon à mesurer les déformations de la gaine de support 24, de manière à pouvoir appréhender et suivre la courbure de la conduite flexible 10, son allongement, sa torsion, ou encore son gonflement Plusieurs types de capteurs à fibre optique peuvent avantageusement être utilisés pour effectuer des mesures de déformations, notamment ceux comportant des réseaux de Bragg et ainsi que ceux dont le principe de mesure est basé sur la réflectométrie Brillouin.

D'autres types connus de capteur à fibre optique pourraient être mis en oeuvre notamment ceux basés sur la réflectométrie Raman, ou encore la réflectométrie Rayleigh, et le capteur à fibre optique pourrait être utilisé pour mesurer d'autres grandeurs physiques, par exemple la température de la conduite flexible 10 ou encore la composition chimique des fluides en contact avec la bande instrumentée 28.

La bande instrumentée 28 est avantageusement réalisée en polymère, par exemple du polyamide ou du polyéthylène, qui entoure le capteur à fibre optique pour le protéger, notamment de l'abrasion lors de la pose. En effet, la bande instrumentée 28 est entraînée en mouvement et en frottement contre des guides de pose lors de son application, comme on l'expliquera dans la suite de la description.

Au surplus, la bande instrumentée 28 est emprisonnée entre la gaine de support 24 et une gaine de maintien 30 installée autour de la gaine de support 24. Aussi, la gaine de maintien 30 enserre la gaine de support 24 et exerce ainsi une pression radiale sur la bande épaisse 28 qui est alors maintenue en position fixe contre la surface externe cylindrique 26.

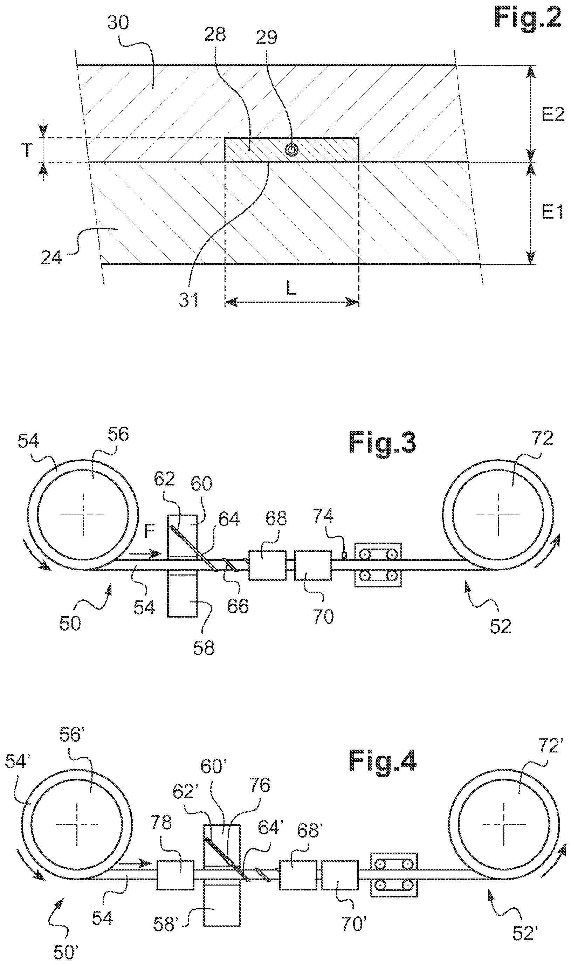

On se reportera sur la Figure 2 illustrant en coupe droite la bande instrumentée 28 en prise entre la gaine de maintien 30 et la gaine de support 24, représentées partiellement. La bande instrumentée 28 présente, selon cette variante d'exécution, une section rectangulaire d'une épaisseur T, valant par exemple entre 10% et 20% de sa largeur L. Et à l'intérieur de la bande instrumentée 28, est noyé un capteur à fibre optique 29 qui s'étend longitudinalement au coeur de la bande instrumentée 28.

Le capteur à fibre optique 29 est couplé à la bande instrumentée 28, et la bande instrumentée 28 est elle-même couplé à la gaine de support 24 et à la gaine de maintien 30 qui l'enserre. Le terme « couplé » signifie que toute déformation de l'un des éléments dans le domaine élastique est transmise intégralement à l'autre élément couplé sans aucun mouvement relatif aux interfaces.

La bande instrumentée 28, également dénommé jonc ou câble, est, par exemple, obtenue par extrusion ou bien par pultrusion. Dans le premier cas on extrude directement le jonc en polymère thermoplastique autour du capteur à fibre optique 29. Avantageusement, une couche d'un primaire d'accrochage est insérée entre le capteur à fibre optique 29 et le polymère pour améliorer l'adhérence et partant le couplage du capteur à fibre optique et de la bande instrumentée. Dans le second cas, on pultrude un jonc composite unidirectionnel, par exemple en fibre de verre et en résine époxy, et on vient insérer la fibre optique à l'intérieur du jonc durant la pultrusion.

Le capteur à fibre optique 29 est ainsi parfaitement couplé aux matériaux de la bande instrumentée 28, et partant, elle sera parfaitement couplée à la gaine de support 24 grâce à la gaine de maintien 30. En effet, la gaine de maintien 30 vient bloquer mécaniquement la bande instrumentée 28 selon d'une part une direction axiale, c'est-à-dire parallèle à l'axe de la conduite, et d'autre part une direction radiale. De la sorte, la gaine de maintien 30 permet d'éviter les glissements entre la bande instrumentée 28 et la gaine de support 24 selon les deux directions précitées. Ainsi, l'angle d'hélice du capteur à fibre optique par rapport à l'axe de la conduite, est figé, tout comme le pas.

En outre, la gaine de maintien 30 permet également de protéger la bande instrumentée 28 et le capteur à fibre optique 29 pendant toute la durée d'utilisation de la conduite flexible instrumentée.

De plus, la bande instrumentée 28 est maintenue en position fixe selon son axe longitudinale par rapport à la gaine de support 24 et/ou la gaine de maintien 30. Pour ce faire, la bande instrumentée 28 est avantageusement collée ou soudée sur la gaine de support 24, ce qui a pour effet d'empêcher ces deux pièces de glisser l'une par rapport à l'autre selon une direction parallèle à l'axe longitudinal de la bande instrumentée 28. Le collage ou le soudage de la bande instrumentée 28 sur la gaine de support 24 peut être remplacé ou complété par des moyens d'ancrage mécanique entre la bande instrumentée 28 et la gaine de maintien 30, ces moyens ayant pour fonction d'empêcher la bande instrumentée 28 de glisser par rapport à la gaine de maintien 30 selon une direction parallèle à l'axe longitudinal de la bande instrumentée 28. Ces moyens d'ancrage longitudinal peuvent par exemple, consister en des irrégularités géométriques aménagées sur la face externe et/ou les faces latérales de la bande instrumentée 28, par exemple des stries transversales ou des variations locales de la largeur L ou de l'épaisseur T, la gaine de maintien 30 venant épouser ces irrégularités.

La face inférieure 31 de la bande instrumentée 24 est sensiblement plane (avant enroulement de cette dernière autour de la gaine de support 24) de manière à augmenter la surface de contact entre la bande instrumentée 28 et la gaine de support 24, ce qui permet à d'augmenter l'adhérence entre ces deux pièces.

On comprend que la bande instrumentée 28 doit présenter une raideur inférieure à la raideur de la gaine de support 24 à laquelle elle est couplée de manière à ce que la présence de la bande instrumentée n'affecte pas sensiblement les déformations de la gaine de support 24. Aussi, le produit de l'épaisseur T de la bande instrumentée 28 par le module d'élasticité en traction de la bande instrumenté 28 est avantageusement inférieur au produit de l'épaisseur de la gaine de support 24 par le module d'élasticité en traction de la gaine de support 24. Lorsque la bande instrumentée 28 et la gaine de support 24 sont constituées du même matériau polymère, l'épaisseur de la bande instrumentée 28 est préférentiellement très inférieure à l'épaisseur de la gaine de support 24, par exemple dix fois plus faible et de préférence trente fois plus faible.

On détaillera, ci-après des modes de fabrication de la conduite flexible selon l'invention et plus précisément, des modes d'association de la bande instrumentée 28 et de la gaine de support 24.

Avant de décrire ces modes de fabrication, on expliquera en référence à la Figure 1B, les conditions de service en milieu marin de la conduite flexible instrumentée.

Ainsi, la Figure 1B illustre un milieu marin présentant un fond marin 32 et une surface opposée 34. Une installation de fond 36 située sur le fond marin 32 est reliée à une installation de surface 38 flottant en surface 34, par l'intermédiaire d'une conduite flexible instrumentée 40. Celle-ci se prolonge, à la surface, par un câble optique 42 rejoignant un dispositif d'acquisition et de traitement 44 piloté par un ordinateur 46.

On se reportera directement à la Figure 3 montrant une installation de fabrication d'une conduite flexible instrumentée selon un premier mode de réalisation.

L'installation présente une entrée 50 opposée à une sortie 52. À l'entrée 50, une structure tubulaire 54 est enroulée sur un touret 56. La structure tubulaire 54 présente, de l'intérieur vers l'extérieur, une gaine de pression, une voûte de pression, deux nappes d'armures de traction et une gaine externe en matériau polymère formant la gaine de support. La structure tubulaire 54 traverse tout d'abord une rubaneuse 58. Celle-ci comporte un châssis tournant 60 sur lequel est installée une bobine 62 d'une bande instrumentée 64 telle que décrite ci-dessus, en référence aux Figures 1 et 2. Le châssis tournant 60 présente un axe de rotation sensiblement confondu avec l'axe de la structure tubulaire 54. La bobine 62 est agencée sur le châssis tournant 60 de façon à ce que son arbre de rotation soit incliné par rapport à l'axe de rotation du châssis tournant 60. De la sorte, lorsque la structure tubulaire 54 est entraînée en mouvement selon le sens de la flèche F, de l'entrée vers la sortie, et que simultanément, le châssis tournant 60 est entraîné en rotation, la bande instrumentée 64 vient s'appliquer selon une hélice 66 sur la surface externe cylindrique de la gaine externe formant gaine de support.

La vitesse d'avancement de la structure tubulaire 54, conjuguée à la vitesse de rotation du châssis tournant 60, déterminent le pas et l'angle de l'hélice 66 par rapport à l'axe longitudinal de la conduite flexible instrumentée.

La bande instrumentée 64 comporte un capteur à fibre optique de mesure d'allongement. Ce capteur comporte une fibre optique en verre dont le revêtement est avantageusement constitué de carbone et de polyimide, ce qui permet à ce capteur à fibre optique de résister à des températures de l'ordre de 300°C. Comme cela est expliqué plus haut, une telle fibre optique est relativement fragile, et supporte difficilement des allongements supérieurs à 2% sans être détériorée. Aussi, la fibre optique est enroulée en hélice autour de la gaine de support pour ne pas subir de contraintes trop importantes. En revanche, il a été découvert que si l'angle d'hélice est précisément égal à 54,74° par rapport à l'axe longitudinal de la conduite, la fibre optique ne subissait aucune contrainte lorsque la conduite se déformait. Aussi, il est nécessaire de trouver un angle optimal, en fonction d'une part des possibilités de déformation maximale du capteur à fibre optique et d'autre part de la sensibilité de mesure d'allongement du capteur à fibre optique.

En pratique l'angle d'hélice est avantageusement compris entre 45.5° et 66.5° pour éviter de soumettre le capteur à fibre optique à un allongement relatif de l'ordre de 2% ou plus. Préférentiellement, l'angle d'hélice est compris entre 49,5° et 60,3° pour éviter de soumettre le capteur à fibre optique à un allongement relatif de l'ordre de 1% ou plus.

En outre, avantageusement, l'angle d'hélice n'est pas compris entre 54,5° et 55° de façon à permettre de mesurer la courbure de la conduite flexible. Préférentiellement, l'angle d'hélice n'est pas compris entre 53,9° et 55,8° de façon à permettre de mesurer plus précisément la courbure de la conduite flexible.

La combinaison de ces critères conduit à choisir un angle d'hélice compris entre 45,5° et 54,5° ou entre 55° et 66,5°. En outre, préférentiellement, l'angle d'hélice est compris entre 49,5° et 53,9° ou entre 55,8° et 60,3°.

De préférence, la bande instrumentée 64 est enduite de colle avec un encolleur non représenté avant d'être appliquée sur la surface externe de la gaine de support. De la sorte, l'hélice 66 demeure en position fixe sur la gaine de support de la structure tubulaire 54.

Ensuite, la structure tubulaire 54 ainsi équipée de la bande instrumentée 64, traverse une tête d'extrusion annulaire 68 permettant d'extruder la gaine de maintien autour de la gaine de support et ainsi de venir enserrer la bande instrumentée 64 contre la gaine de support de la structure tubulaire 54. La conduite flexible instrumentée ainsi réalisée traverse ensuite une enceinte de refroidissement 70 avant d'être enroulée autour d'un touret de réception 72.

Par ailleurs, l'installation représentée sur la Figure 3 montre un capteur ultrasons 74 permettant de détecter les spires de la bande instrumentée 64 de façon à mesurer précisément le pas de l'hélice 66 après refroidissement et rétreint thermique. Cette mesure est réalisée à travers la gaine de maintien. Elle permet d'asservir précisément la vitesse de rotation du châssis tournant 60 en fonction de la vitesse d'avancement de la structure tubulaire 54, de façon à obtenir un angle d'hélice précis et stable sur toute la longueur de la conduite flexible.

On se reportera à présent à la Figure 4 montrant une installation de fabrication selon un second mode de réalisation. Les éléments analogues ou fonctionnellement analogues à ceux de l'installation représentée sur la Figure 3, comportent la même référence affectée d'un signe prime : « ' ».

Ainsi on retrouve une structure tubulaire 54' enroulée sur un touret 56' et située au niveau d'une entrée 50'. L'installation comporte une rubaneuse 58' équipée d'un châssis tournant 60' et d'une bobine 62' sur laquelle est enroulée une bande instrumentée 64' faite d'un polymère thermoplastique. Ainsi qu'on l'expliquera ci-après, plus en détail, un capteur à fibre optique est noyé au coeur de la bande épaisse 64'. Le polymère thermoplastique est par exemple du polyéthylène ou bien encore du polyamide. Ce type de polymère présente l'avantage d'être thermosoudable. Aussi, la rubaneuse 58' comporte un dispositif de chauffage 76 de la bande instrumentée 64', tandis que l'installation comporte, entre l'entrée 50' et la rubaneuse 58', un four 78 que traverse la structure tubulaire 54'. Ainsi, le four 78 ramollit la gaine externe en matériau polymère faisant office de gaine de support et le dispositif de chauffage 76 permet de ramollir, lui, le polymère thermoplastique avant que la bande instrumentée 64' ne vienne s'appliquer à la surface de la gaine de support en matériau polymère de la structure tubulaire 54' pour pouvoir s'y souder.

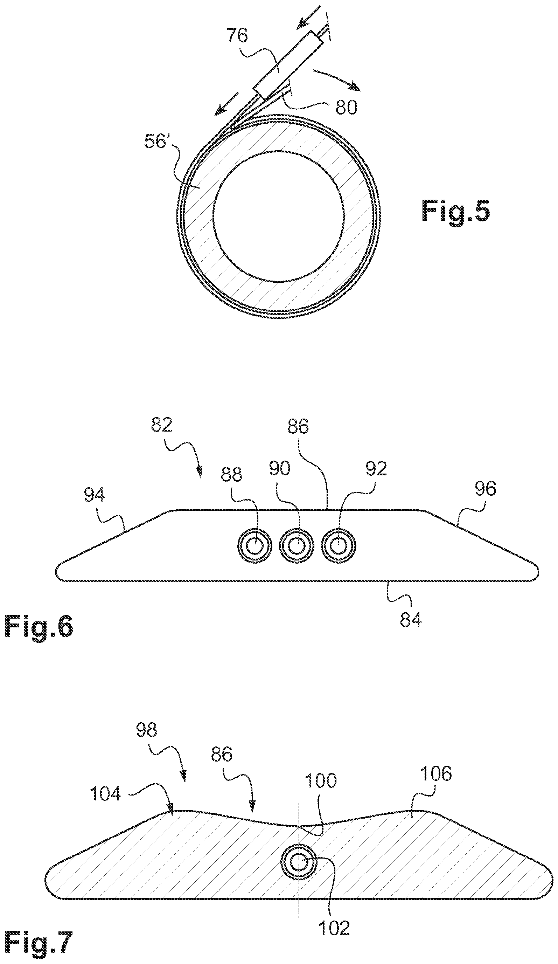

En outre, un dispositif de chauffage à air chaud 80 tel qu'illustré sur la Figure 5 sur laquelle on retrouve la structure tubulaire 54', la bande instrumentée 64' venant s'appliquer contre la gaine externe, permet d'apporter de l'énergie thermique complémentaire. De la sorte le soudage de la bande instrumentée 64' sur la gaine de support de la structure tubulaire 54' est plus encore favorisé.

De la même façon que dans le mode précédent de réalisation illustré sur la Figure 3, la conduite flexible instrumentée réalisée traverse, après la tête d'extrusion annulaire 68', une enceinte de refroidissement 70' avant d'être enroulée autour d'un touret de réception 72'.

On observera que le capteur à fibre optique en verre est avantageusement revêtu de carbone et de polyimide permettant de le préserver durablement de l'augmentation de la température durant les phases de soudage et d'extrusion.

Avantageusement, la tête d'extrusion annulaire 68, 68', présente une chambre en dépression non représentée, que traverse la structure tubulaire 54, 54', équipée de la bande instrumentée 64, 64'. De la sorte, une dépression est créée au moyen d'une pompe à vide, entre la gaine de support et la gaine de maintien en cours de formation, de sorte que cette dernière vient se plaquer librement contre la surface cylindrique externe de la gaine de support. Par la-même, la bande instrumentée 64, 64' est maintenue à force contre la surface cylindrique externe, ce qui permet une meilleure solidarisation de la bande instrumentée 64, 64' et de la gaine de support. Cette solidarisation est importante, pour que les mouvements de la gaine soient intégralement retransmis mécaniquement au capteur à fibre optique.

Une telle chambre présente une ouverture située à l'entrée de la tête d'extrusion annulaire, et cette ouverture est équipée d'un joint d'étanchéité permettant de réduire les fuites d'air entre la structure tubulaire 54, 54', équipée de la bande instrumentée 64, 64' et ladite ouverture. Ce joint vient comprimer fortement la structure tubulaire 54, 54', qui est entraînée en translation au travers, et les possibilités d'endommagement de la bande instrumentée 64, 64', notamment par frottement, sont grandes.

Aussi, pour atténuer ce risque, la bande instrumentée 64, 64', présente une section générale trapézoïdale, comme on l'expliquera en référence aux Figures 6 et 7.

La Figure 6 illustre en section droite, une bande instrumentée 82 de section trapézoïdale selon un premier mode particulier de mise en oeuvre. La bande instrumentée 82 présente deux faces opposées, une face inférieure 84 apte à venir en appui sur la gaine de support de la structure tubulaire et une face supérieure opposée 86 apte à être recouverte par la gaine de maintien.

En outre, la bande instrumentée 82 présente ici, en son coeur, trois capteurs à fibre optique parallèles 88, 90, 92. Au surplus, elle présente deux côtés opposés 94, 96 et symétriques l'un de l'autre. Chaque coté forme avec la face inférieure 84 un angle aigu inférieur à 45°, voisin par exemple de 30°.

De la sorte, l'entraînement en friction de la bande instrumentée 82 appliquée sur la gaine étanche à travers le joint d'étanchéité, ne provoque pas l'endommagement ou le décollement de la bande instrumentée 82.

Selon un second mode particulier de mise en oeuvre, tel qu'illustré sur la Figure 7, une bande instrumentée 98, de section droite générale trapézoïdale, comporte une face supérieure 99 présentant une rainure longitudinale peu prononcée, dont l'extremum 100 est située au droit du capteur à fibre optique 102. La face supérieure 99 présente ainsi deux portées d'appui 104, 106 opposées par rapport à l'extremum 100. De la sorte, les éléments d'entraînement de la structure tubulaire, tels les rouleaux de maintien ou bien les chenilles, ne viennent pas endommager le capteur à fibre optique.

## Revendications

1. Procédé de fabrication d'une conduite flexible instrumentée (10) pour le transport des hydrocarbures, ledit procédé de fabrication étant du type comprenant les étapes suivantes :
- on fournit une structure tubulaire (54) comprenant une gaine de support (24) en matériau polymère présentant une surface externe cylindrique libre (26) ;
- on fournit au moins un capteur à fibre optique (29) ;
- on enroule hélicoïdalement ledit au moins un capteur à fibre optique (29) autour de ladite gaine de support (24) pour pouvoir solidariser ledit au moins un capteur à fibre optique (29) avec ladite gaine de support ;
**caractérisé en ce qu'**en outre, on extrude une gaine de maintien (30) en matériau polymère autour de ladite gaine de support (24),
et **en ce qu'**on applique coaxialement ladite gaine de maintien (30) sur ladite gaine de support (24), de façon à maintenir ledit au moins un capteur à fibre optique (29) en position fixe contre ladite surface externe cylindrique (26).

2. Procédé de fabrication selon la revendication 1, **caractérisé en ce qu'**on créer une dépression entre ladite structure tubulaire (54) et ladite gaine de maintien (30) de manière à ce que ladite gaine de maintien (30) vienne se plaquer contre la surface externe cylindrique de la gaine de support (24).

3. Procédé de fabrication selon la revendication 1 ou 2, **caractérisé en ce qu'**on enroule hélicoïdalement ledit au moins un capteur à fibre optique (29) avec un angle d'hélice compris entre 45,5° et 54,5° ou entre 55° et 66,5° par rapport à l'axe de la structure tubulaire.

4. Procédé de fabrication selon l'une quelconque des revendications 1 à 3, **caractérisé en ce que** le capteur à fibre optique (29) est un capteur de mesure de déformation.

5. Procédé de fabrication selon l'une quelconque des revendications 1 à 4, **caractérisé en ce que** le capteur à fibre optique (29) comporte au moins un réseau de Bragg.

6. Procédé de fabrication selon l'une quelconque des revendications 1 à 5, **caractérisé en ce qu'**on fournit ledit au moins un capteur à fibre optique (29) noyé à l'intérieur d'un corps longitudinal (28).

7. Procédé de fabrication selon la revendication 6, **caractérisé en ce qu'**on enroule hélicoïdalement ledit corps longitudinal (64) autour de ladite structure tubulaire (54) pour pouvoir solidariser ledit au moins un capteur à fibre optique (29) avec ladite gaine de support (24).

8. Procédé de fabrication selon la revendication 7, **caractérisé en ce qu'**on relie ledit corps longitudinal (64) et ladite surface externe cylindrique.

9. Procédé de fabrication selon l'une quelconque des revendications 6 à 8, **caractérisé en ce qu'**on fournit ledit au moins un capteur à fibre optique noyé à l'intérieur d'un corps longitudinal de section trapézoïdale (82, 98).

10. Procédé de fabrication selon la revendication 9, **caractérisé en ce que** ladite section trapézoïdale présente une base large opposée à une base étroite.

11. Procédé de fabrication selon l'une quelconque des revendications 1 à 10, **caractérisé en ce qu'**on fournit une structure tubulaire (54) comprenant en outre au moins une nappe d'armures de traction (20, 22).

12. Procédé de fabrication selon la revendication 11, **caractérisé en ce que** ladite gaine de support est située à l'extérieur de ladite au moins une nappe d'armures de traction (20, 22).

13. Procédé de fabrication selon la revendication 12, **caractérisé en ce que** ladite gaine de maintien (30) est la couche la plus extérieure de ladite structure tubulaire (54).

14. Procédé de fabrication selon la revendication 12 ou 13, **caractérisé en ce qu'**on fournit une structure tubulaire comprenant en outre, à l'intérieur de ladite au moins une nappe d'armures de traction (20, 22), une autre gaine en matériau polymère (12).

15. Installation de fabrication d'une conduite flexible instrumentée (10) pour le transport des hydrocarbures, ladite installation présentant une entrée (50) opposée à une sortie (52) pour pouvoir entraîner, de ladite entrée vers ladite sortie, une structure tubulaire (54) comprenant une gaine de support en matériau polymère présentant une surface externe cylindrique libre, ladite installation comprenant un support de stockage mobile (60) apte à stocker au moins un capteur à fibre optique (29), de manière à pouvoir enrouler hélicoïdalement ledit au moins un capteur à fibre optique (29) autour de ladite gaine de support de façon à pouvoir solidariser ledit au moins un capteur à fibre optique (29) avec ladite gaine de support ;
**caractérisée en ce qu'**elle comprend en outre un dispositif de transformation (68) comportant une tête d'extrusion annulaire pour pouvoir former une gaine de maintien en matériau polymère autour de ladite gaine de support pour appliquer ladite gaine de maintien coaxialement sur ladite gaine de support, de façon à pouvoir maintenir ledit au moins un capteur à fibre optique (29) en position fixe contre ladite surface externe cylindrique et **en ce qu'**elle comprend une chambre étanche située entre ladite entrée (50) et ladite tête d'extrusion annulaire (68, 68') pour pouvoir créer une dépression autour de ladite structure tubulaire (54).

## Patentansprüche

1. Verfahren zur Herstellung einer instrumentierten flexiblen Rohrleitung (10) für den Transport von Kohlenwasserstoffen, wobei das Herstellungsverfahren vom Typ ist, umfassend die folgenden Schritte:
- es wird eine rohrförmige Struktur (54) bereitgestellt, die eine Stützhülse (24) aus Polymermaterial mit einer freien zylindrischen Außenfläche (26) umfasst;
- es wird mindestens ein faseroptischer Sensor (29) bereitgestellt;
- der mindestens eine faseroptische Sensor (29) wird spiralförmig um die Stützhülse (24) gewickelt, um den mindestens einen faseroptischen Sensor (29) mit der Stützhülse fest verbinden zu können;
**dadurch gekennzeichnet, dass** ferner eine Haltehülse (30) aus Polymermaterial um die Stützhülse (24) herum extrudiert wird und dass die Haltehülse (30) koxial an die Stützhülse (24) angelegt wird, derart, dass der mindestens eine faseroptische Sensor (29) in feststehender Position gegen die zylindrische Außenfläche (26) gehalten wird.

2. Herstellungsverfahren nach Anspruch 1, **dadurch gekennzeichnet, dass** ein Unterdruck zwischen der rohrförmigen Struktur (54) und der Haltehülse (30) erzeugt wird, derart, dass sich die Haltehülse (30) gegen die zylindrische Außenfläche der Stützhülse (24) anpresst.

3. Herstellungsverfahren nach Anspruch 1 oder 2, **dadurch gekennzeichnet, dass** der mindestens eine faseroptische Sensor (29) mit einem Steigungswinkel zwischen 45,5° und 54,5° oder zwischen 55° und 66,5° gegenüber der Achse der rohrförmigen Struktur spiralförmig gewickelt wird.

4. Herstellungsverfahren nach einem der Ansprüche 1 bis 3, **dadurch gekennzeichnet, dass** der faseroptische Sensor (29) ein Verformungsmesssensor ist.

5. Herstellungsverfahren nach einem der Ansprüche 1 bis 4, **dadurch gekennzeichnet, dass** der faseroptische Sensor (29) mindestens ein Bragg-Gitter aufweist.

6. Herstellungsverfahren nach einem der Ansprüche 1 bis 5, **dadurch gekennzeichnet, dass** der mindestens eine faseroptische Sensor (29) in das Innere eines längsgerichteten Körpers (28) eingebettet bereitgestellt wird.

7. Herstellungsverfahren nach Anspruch 6, **dadurch gekennzeichnet, dass** der längsgerichtete Körper (64) spiralförmig um die rohrförmige Struktur (54) gewickelt wird, um den mindestens einen faseroptischen Sensor (29) mit der Stützhülse (24) fest verbinden zu können.

8. Herstellungsverfahren nach Anspruch 7, **dadurch gekennzeichnet, dass** der längsgerichtete Körper (64) und die zylindrische Außenfläche verbunden werden.

9. Herstellungsverfahren nach einem der Ansprüche 6 bis 8, **dadurch gekennzeichnet, dass** der mindestens eine faseroptische Sensor in das Innere eines längsgerichteten Körpers mit trapezförmigem Querschnitt (82, 98) eingebettet bereitgestellt wird.

10. Herstellungsverfahren nach Anspruch 9, **dadurch gekennzeichnet, dass** der trapezförmige Querschnitt eine breite Basis aufweist, die einer schmalen Basis gegenüberliegt.

11. Herstellungsverfahren nach einem der Ansprüche 1 bis 10, **dadurch gekennzeichnet, dass** eine rohrförmige Struktur (54) bereitgestellt wird, die ferner mindestens eine Schicht von Zugarmierungen (20, 22) umfasst.

12. Herstellungsverfahren nach Anspruch 11, **dadurch gekennzeichnet, dass** die Stützhülse sich außerhalb der mindestens einen Schicht von Zugarmierungen (20, 22) befindet.

13. Herstellungsverfahren nach Anspruch 12, **dadurch gekennzeichnet, dass** die Haltehülse (30) die äußerste Schicht der rohrförmigen Struktur (54) ist.

14. Herstellungsverfahren nach Anspruch 12 oder 13, **dadurch gekennzeichnet, dass** eine rohrförmige Struktur bereitgestellt wird, die ferner, im Inneren der mindestens einen Schicht von Zugarmierungen (20, 22), eine weitere Hülse aus Polymermaterial (12) umfasst.

15. Anlage zur Herstellung einer instrumentierten flexiblen Rohrleitung (10) für den Transport von Kohlenwasserstoffen, wobei die Anlage einen Eingang (50) umfasst, der einem Ausgang (52) gegenüberliegt, um von dem Eingang zu dem Ausgang eine rohrförmige Struktur (54) antreiben zu können, die eine Stützhülse aus Polymermaterial mit einer freien zylindrischen Außenfläche umfasst, wobei die Anlage eine bewegliche Lagerungshalterung (60) umfasst, die in der Lage ist, mindestens einen faseroptischen Sensor (29) zu lagern, derart, dass der mindestens eine faseroptische Sensor (29) spiralförmig um die Stützhülse gewickelt werden kann, derart, dass der mindestens eine faseroptische Sensor (29) mit der Stützhülse fest verbunden werden kann;
**dadurch gekennzeichnet, dass** sie ferner eine Umformungsvorrichtung (68) umfasst, die einen ringförmigen Extruderkopf aufweist, um eine Haltehülse aus Polymermaterial um die Stützhülse herum formen zu können, um die Haltehülse koaxial an der Stützhülse anzulegen, derart, dass der mindestens eine faseroptische Sensor (29) in feststehender Position gegen die zylindrische Außenfläche gehalten wird, und dass
sie eine abgedichtete Kammer umfasst, die sich zwischen dem Eingang (50) und dem ringförmigen Extruderkopf (68, 68') befindet, um einen Unterdruck um die rohrförmige Struktur (54) herum erzeugen zu können.

## Claims

1. Method of fabricating an instrumented flexible pipe (10) for the transport of hydrocarbons, said fabrication method being of the type including the following steps:
- a tubular structure (54) is procured including a polymer material support sheath (24) having a free cylindrical external surface (26);
- at least one optical fibre sensor (29) is procured;
- said at least one optical fibre sensor (29) is wound helically around said support sheath (24) so as to be able to fasten said at least one optical fibre sensor (29) to said support sheath;
**characterized in**
**that** we further extrude a retaining sheath (30) in polymer material around said support sheath (24),
and in that said retaining sheath (30) is applied coaxially to said support sheath (24) so as to retain said at least one optical fibre sensor (29) in a fixed position against said cylindrical external surface (26).

2. Fabrication method according to Claim 1, **characterized in that** said we create a reduced pressure between said tubular structure (54) and said retaining sheath (30) so that said retaining sheath (30) is applied against the cylindrical external surface of the support sheath (24).

3. Fabrication method according to Claim 1 or 2, **characterized in that** said at least one optical fibre sensor (29) is wound helically with a helix angle between 45.5° and 54.5° or between 55° and 66.5° relative to the axis of the tubular structure.

4. Fabrication method according to any one of Claims 1 to 3, **characterized in that** the optical fibre sensor (29) is a deformation measurement sensor.

5. Fabrication method according to any one of Claims 1 to 4, **characterized in that** the optical fibre sensor (29) includes at least one Bragg grating.

6. Fabrication method according to any one of Claims 1 to 5, **characterized in that** said at least one optical fibre sensor (29) that is procured is buried inside a longitudinal body (28).

7. Fabrication method according to Claim 6, **characterized in that** said longitudinal body (64) is wound helically around said tubular structure (54) so as to be able to fasten said at least one optical fibre sensor (29) to said support sheath (24).

8. Fabrication method according to Claim 7, **characterized in that** said longitudinal body (64) and said cylindrical external surface are joined.

9. Fabrication method according to any one of Claims 6 to 8, **characterized in that** said at least one optical fibre sensor that is procured is buried inside a longitudinal body (82, 98) of trapezoidal section.

10. Fabrication method according to Claim 9, **characterized in that** said trapezoidal section includes a wide base opposite a narrow base.

11. Fabrication method according to any one of Claims 1 to 10, **characterized in that** a tubular structure (54) is procured further including at least one tensile armour layer (20, 22).

12. Fabrication method according to Claim 11, **characterized in that** said support sheath is situated outside said at least one tensile armour layer (20, 22).

13. Fabrication method according to Claim 12, **characterized in that** said retaining sheath (30) is the outermost layer of said tubular structure (54).

14. Fabrication method according to Claim 12 or 13, **characterized in that** a tubular structure is procured further including, inside said at least one tensile armour layer (20, 22), another polymer material sheath (12).

15. Installation for the fabrication of an instrumented flexible pipe (10) for the transport of hydrocarbons, said installation including an entry (50) opposite an exit (52) so as to be able to drive from said entry to said exit a tubular structure (54) including a polymer material support sheath having a free cylindrical external surface, said installation including a mobile storage support (60) adapted to store at least one optical fibre sensor (29) so as to be able to wind said at least one optical fibre sensor (29) helically around said support sheath so as to be able to fasten said at least one optical fibre sensor (29) to said support sheath;
**characterized in that** it further includes a transformation device (68) comprising an annular extrusion head so as to be able to form said polymer material retaining sheath around said support sheath for applying a retaining sheath coaxially to said support sheath so as to be able to retain said at least one optical fibre sensor (29) in a fixed position against said cylindrical external surface and
**in that** it comprises a sealed chamber situated between said entry (50) and said annular extrusion head (68, 68 ') so as to be able to create a reduced pressure around said tubular structure (54).
